# FASCICULE DE BREVET EUROPEEN

(11) **EP 3 333 007 B1**
(45) Date de publication et mention de la délivrance du brevet: **08.04.2020**
(21) Numéro de dépôt: 17204665.8
(22) Date de dépôt: 30.11.2017
(51) Int. Cl.: B60L 5/20

(54) **BANDE DE FROTTEMENT POUR UN PANTOGRAPHE DE VEHICULE FERROVIAIRE**
SCHLEIFLEISTE FÜR EINEN STROMABNEHMER EINES SCHIENENFAHRZEUGS
PANTOGRAPH WEARING STRIP FOR RAILWAY VEHICLE

(30) Priorité: 09.12.2016 FR 1662227
(43) Date de publication de la demande: 13.06.2018
(73) Titulaire: SNCF Mobilités, 93200 Saint-Denis (FR)
(72) Inventeur: BLANVILLAIN, Gérard, 37270 Veretz (FR); AUDITEAU, Gérard, 92140 Clamart (FR)
(74) Mandataire: Gevers & Orès

(56) Documents cités:
- EP-A1- 0 002 627
- DE-A1-102010 003 874
- FR-A- 1 110 518
- GB-A- 1 209 331
- GÉRARD BLANVILLAIN: "Le carbone au centre des préoccupations économiques", REVUE GÉNÉRALE DES CHEMINS DE FER : RCGF, HC ÉDITIONS, FR, vol. 2015, no. 255, 1 décembre 2015 (2015-12-01), pages 14-21, XP001526826, ISSN: 0035-3183

## Description

### DOMAINE TECHNIQUE

L'invention concerne une bande de frottement pour pantographe de véhicule ferroviaire, tel qu'un train ou un tramway.

### ETAT DE L'ART

Il est connu d'équiper les véhicules ferroviaires, tel que les trains ou les tramways, d'un pantographe adapté pour capter un courant d'alimentation électrique circulant dans une caténaire disposée en hauteur au-dessus d'une voie ferroviaire sur laquelle circule le véhicule ferroviaire.

Une caténaire comprend de manière classique un câble porteur horizontal sur lequel est suspendu un fil de contact horizontal dans lequel circule le courant d'alimentation électrique et par l'intermédiaire duquel le pantographe capte le courant d'alimentation électrique.

Pour cela, le pantographe comprend un archet comprenant une ou plusieurs bandes de frottement s'étendant parallèlement à une direction d'extension longitudinale, horizontale et globalement orthogonale à la direction suivant laquelle le véhicule ferroviaire se déplace et un support collecteur d'électricité auquel est assemblée la bande de frottement. La bande de frottement est prévue pour frotter la caténaire, notamment le fil de contact, de sorte à capter le courant d'alimentation électrique. La grande dimension de la bande de frottement suivant la direction d'extension longitudinale permet d'absorber le zigzag de la caténaire et les mouvements du véhicule ferroviaire comme de la caténaire suivant ladite direction d'extension longitudinale. En revanche, la petite dimension de la bande de frottement suivant une direction transversale, horizontale et orthogonale à la direction d'extension longitudinale, permet de réaliser un contact linéique la bande de frottement et le fil de contact, assurant ainsi le passage du courant d'alimentation électrique du fil de contact de la caténaire à la bande de frottement et donc au véhicule ferroviaire.

Or, pour certaines applications, l'intensité électrique parcourant la bande de frottement peut s'élever à plus de 1000A, entraînant de ce fait des problèmes d'échauffement de la bande de frottement.

Pour résoudre ce problème, il a été proposé d'insérer un insert métallique au sein de la bande de frottement. En effet, l'insert métallique, qui est plus conducteur que la bande de frottement, par exemple en carbone, dévie une partie du courant électrique, de sorte à réduire la quantité de courant électrique parcourant la bande de frottement et ainsi limiter leur échauffement.

Plusieurs solutions ont en outre été proposées pour assembler l'insert métallique au support collecteur d'électricité et ainsi assurer le passage du courant électrique parcourant l'insert métallique vers le support collecteur d'électricité.

Le document FR 1 110 518 A décrit un exemple de bande de frottement dans lequel le support collecteur d'électricité et l'insert métallique sont assemblés par vissage. Cette solution nécessite d'utiliser de petites vis qui sont fragiles. Par ailleurs, cette solution manque de fiabilité dans le sens où il faut serrer les vis pour que le courant passe ce qui réduit la liberté de glissement qui est nécessaire pour compenser les dilatations thermiques différentielles entre le support collecteur d'électricité et l'insert métallique.

Le document DE 10 2010 042 027 A1 décrit un autre exemple de bande de frottement avec insert métallique. Dans ce document, l'insert métallique comprend globalement une forme de U dont les branches présentent alternativement des discontinuités. L'insert métallique est en outre fixé au support collecteur d'électricité au niveau de l'âme dudit U par l'intermédiaire d'une pluralité de vis. Cette solution est compliquée et coûteuse à mettre en œuvre.

Encore un autre exemple de bande de frottement est décrit dans le document DE 44 41 339 A1. Cette bande de frottement comprend un insert métallique moulé directement dans le carbone. Cependant, cela nécessite de mettre le métal en fusion pour le couler dans le carbone et ainsi réaliser l'insert métallique. Or, pour limiter tout risque de détérioration du carbone du fait de la température élevée du métal en fusion, une telle mise en œuvre impose de réaliser la coulée sous atmosphère particulière, de sorte que le procédé proposé dans ce document est particulièrement coûteux et complexe à mettre en œuvre.

### PRESENTATION DE L'INVENTION

La présente invention a pour but de pallier les inconvénients précédemment cités, notamment en proposant une bande de frottement pour pantographe de véhicule ferroviaire présentant un temps d'assemblage plus court, un coût de fabrication plus faible et une qualité d'assemblage plus robuste tout en garantissant une bonne maîtrise du passage du courant électrique entre les bandes de carbone, l'insert métallique et le support collecteur d'électricité.

Plus précisément, l'invention a pour objet une bande de frottement pour un pantographe de véhicule ferroviaire, comprenant :
- une première et une deuxième bande de carbone s'étendant parallèlement à une direction d'extension longitudinale et de part et d'autre d'un plan d'extension longitudinal comprenant ladite direction d'extension longitudinale,
- un insert métallique s'étendant suivant la direction d'extension longitudinale dans le plan d'extension longitudinal et ménagé entre la première bande de carbone et la deuxième bande de carbone, et
- un support collecteur d'électricité auquel sont assemblés les première et deuxième bandes de carbone et l'insert métallique,
le support collecteur d'électricité et/ou l'insert métallique comprenant des moyens d'emboîtement élastique coopérant avec l'insert métallique et/ou le support collecteur d'électricité, de sorte à assurer l'assemblage de l'insert métallique au support collecteur d'électricité et le passage du courant électrique entre l'insert métallique et le support collecteur d'électricité.

Selon différents modes de réalisation de l'invention, qui pourront être pris ensemble ou séparément :
- le support collecteur d'électricité comprend une paroi, dite paroi supérieure, agencée en regard des première et deuxième bandes de carbone et de l'insert métallique ;
- les moyens d'emboitement élastique comprennent une paire de languettes déformables élastiquement s'étendant depuis la paroi supérieure en regard l'une de l'autre et définissant ensemble un espace accueillant l'insert métallique ;
- les languettes comprennent chacune une dent déformable élastiquement et plastiquement s'étendant depuis une extrémité libre de ladite languette, dans l'espace défini entre lesdites languettes et accueillant l'insert métallique, lesdites dents coopérant avec l'insert métallique ;
- le support collecteur d'électricité comprend deux parois, dites parois latérales, globalement orthogonales par rapport à la paroi supérieure, lesdites parois latérales se prolongeant au-delà de la paroi supérieure dudit support collecteur d'électricité, en direction des première et deuxième bandes de carbone ;
- ledit prolongement de chacune des parois latérales forme, avec l'une des languettes, une rainure s'étendant parallèlement à la direction d'extension longitudinale et logeant l'une des première et deuxième bandes de carbone ;
- lesdites rainures présentent une section transversale par rapport à la direction d'extension longitudinale de forme globalement trapézoïdale, les première et deuxième bandes de carbone comprenant une portion, dite portion inférieure, présentant une section transversale par rapport à la direction d'extension longitudinale de forme complémentaire avec celle desdites rainures, l'insert métallique appliquant via les languettes un effort de serrage sur la première et la deuxième bandes de carbone. ;
- la paroi supérieure du support collecteur d'électricité est plate, par exemple dans une configuration où les première et deuxième bandes de carbone sont collées sur le support collecteur d'électricité, ou bombée dans un sens opposé aux première et deuxième bandes de carbone, au niveau de chacune des rainures, par exemple dans une configuration où les première et deuxième bandes de carbone sont serties sur le support collecteur d'électricité, afin de conserver une élasticité de serrage ;
- des béquets et des logements sont prévus en correspondance sur les languettes et prolongements des parois latérales et sur la portion inférieure des première et deuxième bandes de carbone ;
- l'insert métallique présente une section transversale par rapport à la direction d'extension longitudinale en forme de rectangle, de carré ou de trapèze ;
- la paroi supérieure du support collecteur d'électricité comprend au moins une ouverture de forme allongée s'étendant suivant la direction d'extension longitudinale, à l'intérieur de laquelle l'insert métallique est logé, les moyens d'emboitement élastique comprenant un rebord déformable élastiquement délimitant la ou les ouvertures ;
- l'insert métallique comprend successivement suivant la direction d'extension longitudinale, au moins un talon coopérant avec le rebord de la ou des ouvertures du support collecteur d'électricité et au moins un logement au niveau duquel l'insert métallique vient buter sur la paroi supérieure du support collecteur d'électricité ;
- les moyens d'emboitement élastique comprennent en outre des languettes déformables élastiquement chacune définie par une paire d'encoches s'étendant sensiblement perpendiculairement au plan et ménagée sur le rebord de la ou des ouvertures ;
- le rebord de la ou des ouvertures du support collecteur d'électricité est en retrait par rapport aux languettes ;
- l'insert métallique comprend une portion, dite portion inférieure, comprenant au moins une rainure ou une ouverture de forme allongée s'étendant suivant la direction d'extension longitudinale et coopérant avec les moyens d'emboitement élastique du support collecteur d'électricité.

La présente invention a également pour objet un insert métallique pour une bande de frottement telle que précédemment décrite.

La présente invention a aussi pour objet un support collecteur d'électricité pour une bande de frottement telle que précédemment décrite.

La présente invention a encore pour objet un archet de pantographe comprenant au moins une bande de frottement telle que précédemment décrite.

La présente invention a en outre pour objet un pantographe pour véhicule ferroviaire comportant un archet comprenant au moins une bande de frottement telle que précédemment décrite.

### PRESENTATION DES DESSINS

L'invention sera mieux comprise, et d'autres buts, détails, caractéristiques et avantages de celle-ci apparaîtront plus clairement au cours de la description explicative détaillée qui va suivre, d'au moins un mode de réalisation de l'invention donné à titre d'exemple purement illustratif et non limitatif, en référence aux dessins schématiques annexés, sur lesquels :
- la figure 1 est une vue de côté d'une bande de frottement pour pantographe de véhicule ferroviaire selon un premier mode de réalisation de l'invention ;
- la figure 2 est une vue en coupe de la bande de frottement selon le premier mode de réalisation de l'invention, suivant le plan A-A défini sur la figure 1 ;
- la figure 3 est une vue coupe de la bande de frottement selon le premier mode de réalisation de l'invention, suivant le plan B-B défini sur la figure 1 ;
- la figure 4 est une vue de dessus de la bande de frottement selon le premier mode de réalisation de l'invention, suivant la flèche C représentée sur la figure 1 ;
- la figure 5 est une vue de côté d'un insert métallique de la bande de frottement selon le premier mode de réalisation de l'invention ;
- la figure 6 est une vue de côté d'une variante du premier mode de réalisation dans lequel la bande de frottement comprend un insert métallique en plusieurs tronçons ;
- la figure 7 est une vue en coupe d'un support collecteur d'électricité de la bande de frottement selon le premier mode de réalisation de l'invention ;
- la figure 8 est une vue de côté d'un insert métallique d'une bande de frottement pour pantographe de véhicule ferroviaire selon un deuxième mode de réalisation de l'invention :
- la figure 9 est une vue de dessus et de détail d'un support collecteur d'électricité de la bande de frottement selon le deuxième mode de réalisation de l'invention ;
- la figure 10 est une vue de détail, en coupe suivant le plan D-D défini sur les figures 8 et 9, de la bande de frottement selon le deuxième mode de réalisation de l'invention ;
- la figure 11 une vue de détail, en coupe suivant le plan E-E illustré aux figures 8 et 9, de la bande de frottement selon le deuxième mode de réalisation de l'invention ;
- la figure 12 est une vue de détail, en coupe suivant le plan F-F défini sur les figures 8 et 9, de la bande de frottement selon le deuxième mode de réalisation de l'invention ;
- la figure 13 est une vue de côté d'une bande de frottement pour pantographe de véhicule ferroviaire selon un troisième mode de réalisation de l'invention ;
- la figure 14 est une vue en coupe de la bande de frottement selon le troisième mode de réalisation de l'invention, suivant le plan G-G défini sur la figure 13 ;
- la figure 15 est une vue en coupe de la bande de frottement selon le troisième mode de réalisation de l'invention, suivant le plan H-H défini sur la figure 13 ;
- la figure 16 est une vue partielle, en coupe, d'une variante de réalisation de la bande de frottement illustrée à la figure 14.

### DESCRIPTION DETALLEE

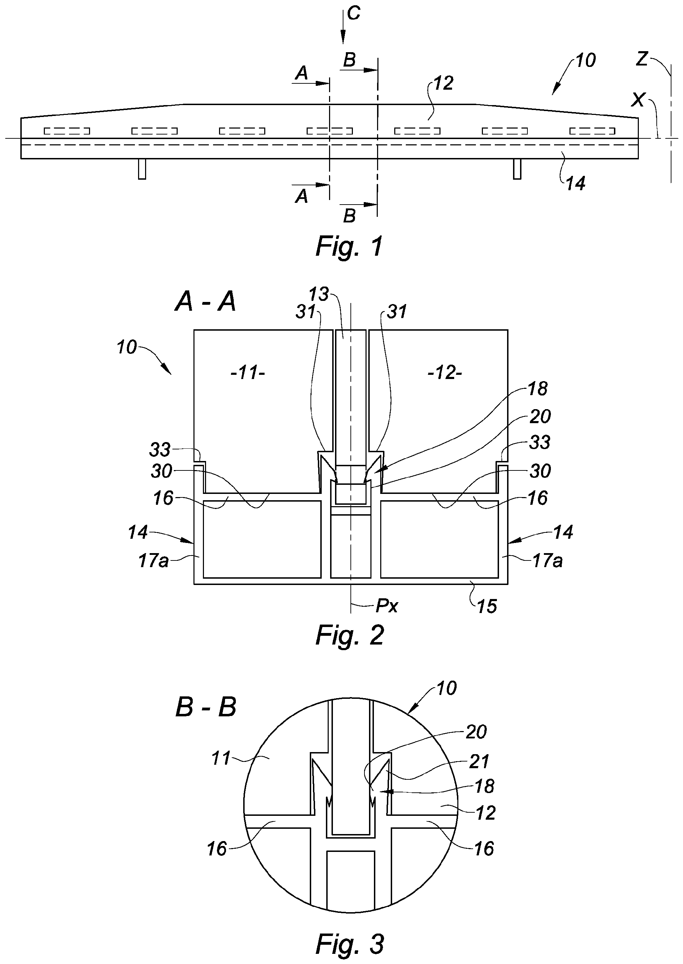

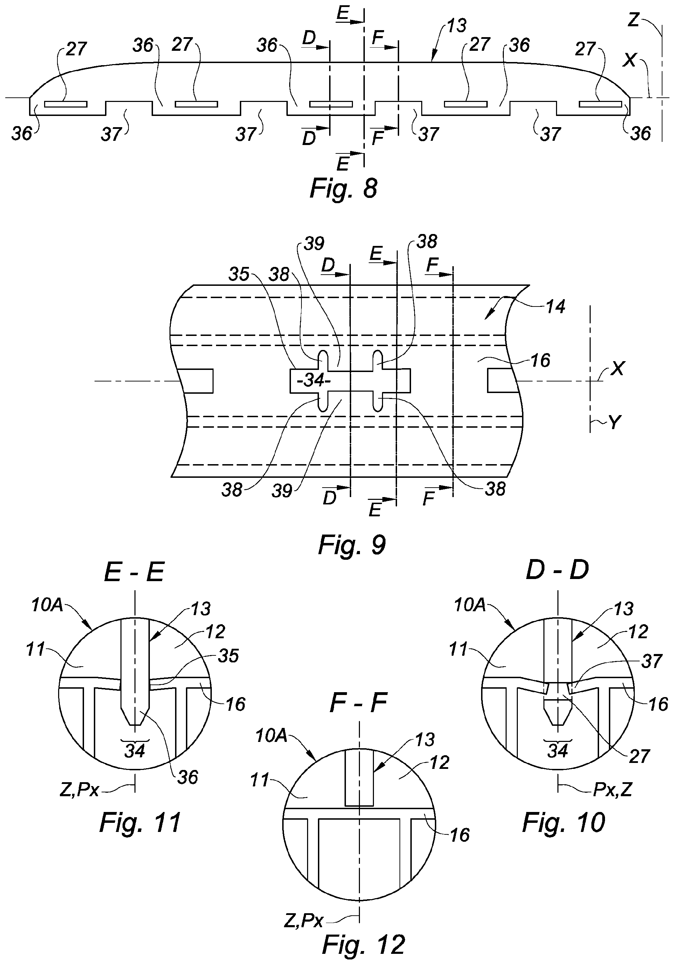

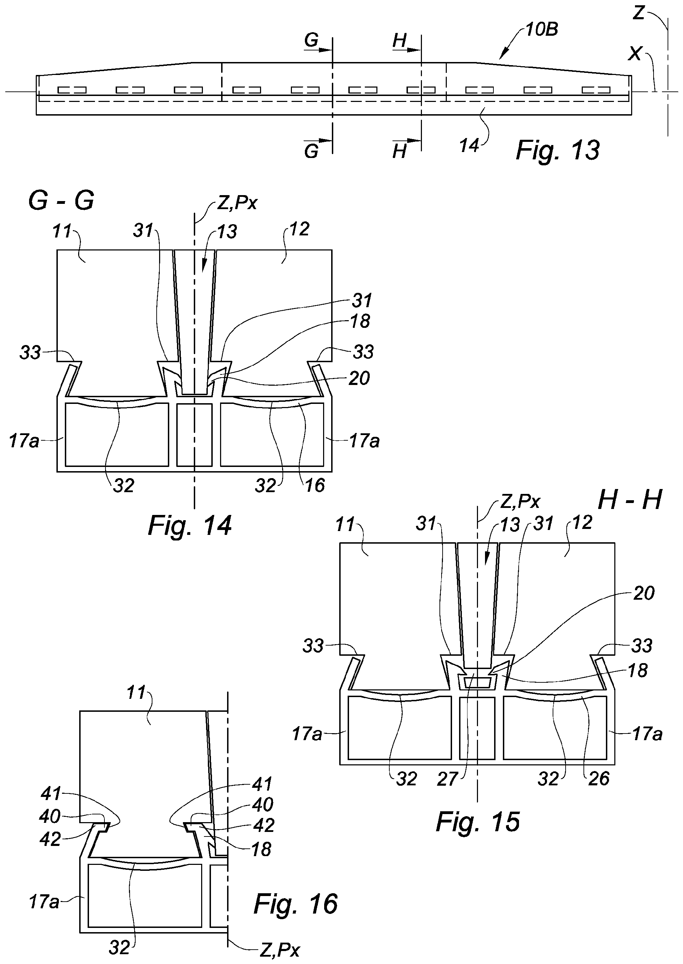

Les figures 1 à 7 montrent une bande de frottement 10 pour un archet (non illustré) de pantographe (non illustré) d'un véhicule ferroviaire (non illustré), notamment d'un train ou d'un tramway, selon un premier mode de réalisation de l'invention. Les figures 8 à 12 montrent une bande de frottement 10A pour pantographe de véhicule ferroviaire selon un deuxième mode de réalisation de l'invention. Les figures 13 à 16 montrent une bande de frottement 10B pour pantographe de véhicule ferroviaire selon un troisième mode de réalisation de l'invention. Les éléments communs entre ces différents modes de réalisation présentent les mêmes références.

On définit un repère orthogonal comprenant une direction d'extension longitudinale X, une direction transversale Y et une direction verticale Z. On notera que la direction transversale Y correspond à la direction suivant laquelle le véhicule ferroviaire se déplace.

On définit en outre un plan P_{X} comprenant la direction d'extension longitudinale X. Le plan P_{X} est par exemple défini par la direction d'extension longitudinale X et par la direction verticale Z.

La bande de frottement 10, 10A, 10B comprend :
- une première et une deuxième bande 11, 12 de carbone s'étendant parallèlement à la direction d'extension longitudinale X, de part et d'autre du plan P_{X},
- un insert métallique 13 s'étendant suivant la direction d'extension longitudinale X dans le plan P_{X} et ménagé entre la première bande 11 de carbone et la deuxième bande 12 de carbone d'autre part, et
- un support collecteur d'électricité 14 auquel sont assemblés les première et deuxième bandes 11, 12 de carbone et l'insert métallique 13 (figures 2, 3, 10 à 12 et 14 à 15).

L'insert métallique 13 peut être ménagé au contact de la première bande 11 de carbone d'une part et de la deuxième bande 12 de carbone d'autre part. L'insert métallique 13 peut aussi être ménagé avec jeu entre les première et deuxième bandes 11, 12 de carbone.

Le support collecteur d'électricité 14 est réalisé à partir d'un matériau électriquement conducteur.

En particulier, le support collecteur d'électricité 14 peut être métallique. Il peut notamment être réalisé à partir d'aluminium.

Le support collecteur d'électricité 14 et/ou l'insert métallique 13 comprennent des moyens d'emboîtement élastique 18, 35, 39 coopérant avec l'insert métallique 13 et/ou le support collecteur d'électricité 14, de sorte à assurer l'assemblage de l'insert métallique 13 au support collecteur d'électricité 14 (figures 2, 9, 10 et 11) et le passage du courant électrique entre l'insert métallique 13 et le support collecteur d'électricité 14 via lesdits moyens d'emboîtement élastique 18, 35, 39.

Ainsi, l'insert métallique 13 est assemblé au support collecteur d'électricité 14 par emboitement élastique.

Un tel assemblage par emboitement élastique est plus industriel. Il permet en effet de limiter le temps nécessaire pour l'assemblage de l'insert métallique 13 et du support collecteur d'électricité 14. Par ailleurs, il représente un coût de fabrication faible pour l'insert métallique 13 et le support collecteur d'électricité 14. Enfin, il assure un assemblage robuste entre l'insert métallique 13 et le support collecteur d'électricité 14. Il impose un contact entre l'insert métallique 13 et le support collecteur d'électricité 14 qui garantit une bonne maîtrise du passage du courant électrique entre l'insert métallique 13 et le support collecteur d'électricité 14. Cet assemblage autorise en outre des dilatations thermiques différentielles entre l'insert métallique 13 et le support collecteur d'électricité 14.

### Premier mode de réalisation de l'invention

Les figures 1 à 7 montrent la bande de frottement 10 selon le premier mode de réalisation de l'invention.

Le support collecteur d'électricité 14 s'étend parallèlement à la direction d'extension longitudinale X (figure 1).

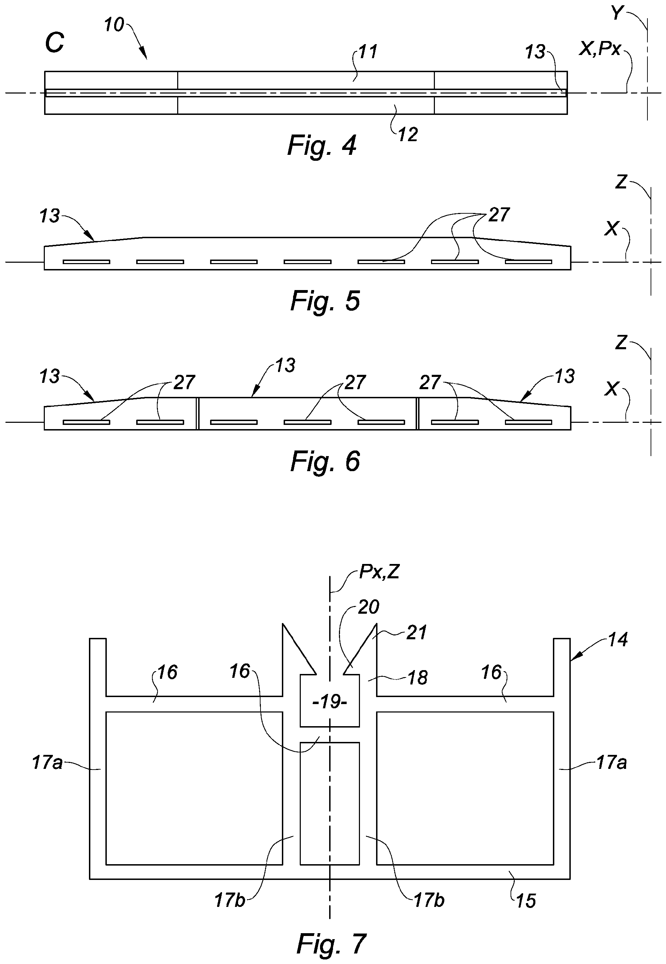

Le support collecteur d'électricité 14 est montré plus en détail à la figure 7.

Le support collecteur d'électricité 14 comprend une paroi inférieure 15 et une paroi supérieure 16 suivant la direction verticale Z. La paroi supérieure 16 est agencée en regard des première et deuxième bandes 11, 12 de carbone et de l'insert métallique 13. Les parois inférieure 15 et supérieure 16 sont par exemple reliées l'une à l'autre par l'intermédiaire d'une pluralité de parois latérales 17a, 17b. Les parois latérales 17a, 17b peuvent être verticales (parallèles au plan Pₓ) ou légèrement inclinées par rapport au plan Pₓ, par exemple jusqu'à 10°.

Par exemple, le support collecteur d'électricité 14 comprend deux premières parois latérales 17a agencées de part et d'autre du plan P_{X} et reliant entre eux des bords longitudinaux des parois inférieure 15 et supérieure 16. Le support collecteur d'électricité 14 comprend en outre deux deuxièmes parois latérales 17b également agencées de part et d'autre du plan P_{X} et reliant chacune la paroi inférieure 15 et la paroi supérieure 16 entre l'une des premières parois latérales 17a et le plan P_{X}.

La paroi supérieure 16 du support collecteur d'électricité 14 comprend une paire de languettes 18 déformables élastiquement s'étendant depuis la paroi supérieure 16 en regard l'une de l'autre et définissant ensemble un espace 19 accueillant l'insert métallique 13 (figure 7). Les languettes 18 assurent l'assemblage de l'insert métallique 13 au support collecteur d'électricité 14 par emboîtement élastique (figures 2 et 3).

Plus précisément, lors de l'assemblage de l'insert métallique 13 et du support collecteur d'électricité 14, l'insert métallique 13 est inséré en force entre les languettes 18 dans l'espace 19, les languettes 18 s'écartant l'une par rapport à l'autre par déformation élastique à mesure que l'insert métallique 13 s'enfonce dans l'espace 19. Une fois l'insert métallique 13 installé entre les languettes 18, la déformation élastique desdites languettes 18 tend à exercer un effort de retour élastique en direction de l'insert métallique 13, enserrant ce dernier et assurant ainsi l'assemblage de l'insert métallique 13 au support collecteur d'électricité 14 (figure 3). L'insert métallique 13 est par exemple inséré en force au moyen d'une presse.

En outre, le contact entre les languettes 18 et l'insert métallique 13 assure le passage du courant électrique entre l'insert métallique 13 et le support collecteur d'électricité 14.

Les languettes 18 s'étendent par exemple depuis la paroi supérieure 16, globalement parallèlement au plan Pₓ. Les languettes 18 sont agencées de part et d'autre du plan Pₓ.

Chacune des languettes 18 comprend en outre une dent 20 déformable élastiquement et plastiquement s'étendant depuis une extrémité libre 21 de ladite languette 18, dans l'espace 19 défini entre la paire de languettes 18 et accueillant l'insert métallique 13 (figures 2, 3 et 7). Autrement dit, les dents 20 des languettes 18 s'étendent depuis l'extrémité libre 21 desdites languettes 18 en direction l'une de l'autre. Les dents 20 coopèrent avec l'insert métallique 13. Les languettes 18 et les dents 20 assurent ensemble l'assemblage de l'insert métallique 13 au support collecteur d'électricité 14 par emboîtement élastique. Les dents 20 conservent partiellement leur propriété élastique au contact de l'insert métallique 13.

Plus précisément, lors de l'assemblage de l'insert métallique 13 et du support collecteur d'électricité 14, les languettes 18 se déforment élastiquement à mesure que l'insert métallique 13 est introduit dans l'espace 19, s'écartant l'une par rapport à l'autre, tandis que les dents 20 sont partiellement écrasées par l'insert métallique 13. Une fois l'insert métallique 13 installé entre les languettes 18, la déformation élastique desdites languettes 18 et l'écrasement partiel des dents 20 (déformation plastique locale) tendent ensemble à exercer un effort de retour élastique en direction de l'insert métallique 13, enserrant ce dernier et assurant ainsi l'assemblage de l'insert métallique 13 au support collecteur d'électricité 14 (figure 3).

Le serrage des languettes 18 et plus précisément de leurs dents 20 contre l'insert métallique 13 assure le passage du courant électrique entre l'insert métallique 13 et le support collecteur d'électricité 14. Le passage du courant électrique est en outre amélioré par les dents 20 des languettes 18 qui ont été légèrement émoussées par le passage en force de l'insert métallique 13 et augmentent ainsi la surface de contact entre l'insert métallique 13 et le support collecteur d'électricité 14 (figure 3).

Par ailleurs, l'insert métallique 13 conserve une liberté de glissement suivant la direction d'extension longitudinale X par rapport au support collecteur d'électricité 14 permettant de compenser l'éventuel écart de dilatation thermique entre l'insert métallique 13 et le support collecteur d'électricité 14. Cela est notamment le cas, lorsque l'insert métallique 13 et le support collecteur d'électricité 14 sont réalisés à partir d'un matériau différent. L'insert métallique 13 est par exemple réalisé à partir de fonte, tandis que le support collecteur d'électricité 14 est par exemple réalisé à partir d'aluminium.

L'insert métallique 13 présente une forme globalement parallélépipédique, notamment une forme globalement de pavé droit.

L'insert métallique 13 est montré plus en détail sur la figure 5.

L'insert métallique 13 comprend une portion inférieure et une portion supérieure suivant la direction verticale Z. La portion inférieure est agencée en regard de la paroi supérieure 16 du support collecteur d'électricité 14.

La portion inférieure de l'insert métallique 13 comprend par exemple au moins une ouverture 27 de forme allongée s'étendant suivant la direction d'extension longitudinale X (figure 5). La ou les ouvertures 27 s'engagent avec les dents 20 des languettes 18 du support collecteur d'électricité 14, de sorte à bloquer l'insert métallique 13 en translation suivant la direction verticale Z dans un sens opposée au support collecteur d'électricité 14 (figure 2). Autrement dit, sous l'effet du retour élastique des languettes 18, les dents 20 forment chacune une butée qui, lorsqu'elle coopère avec une ouverture 27, empêche le retrait de l'insert métallique 13 de l'espace 19 du support collecteur d'électricité 14. L'engagement des dents 20 des languettes 18 du support collecteur d'électricité 14 et de la ou des ouvertures 27 de l'insert métallique 13 supplée ainsi l'effort de retour élastique appliqué par les languettes 18 sur l'insert métallique 13 qui tend à enserrer l'insert métallique 13 entre les languettes 18 et ainsi à assembler l'insert métallique 13 au support collecteur d'électricité 14.

Les ouvertures 27 sont par exemple réalisées par oxydécoupage, notamment lorsque l'insert métallique 13 est réalisé à partir de tôle. Les ouvertures 27 peuvent alternativement être réalisées lors du moulage de l'insert métallique 13, notamment lorsque l'insert métallique 13 est réalisé à partir de fonte.

En variante, la ou les ouvertures 27 peuvent être remplacées par une ou des rainures s'étendant, de part et d'autre du plan Pₓ, parallèlement à la direction d'extension longitudinale X (figure 5).

L'insert métallique 13 peut être réalisé en plusieurs tronçons répartis suivant la direction longitudinale X et assemblés à un même support collecteur d'électricité 14. Dans ce cas, il peut être prévu un léger jeu suivant la direction d'extension longitudinale X entre les tronçons de l'insert métallique 13, afin de réduire les contraintes dues à la dilatation de chacun des tronçons. Cette variante est représentée sur la figure 6.

Les première et deuxième bandes 11, 12 de carbone présentent une forme globalement parallélépipédique, notamment une forme globalement de pavé droit (figures 2 et 3).

Les première et deuxième bandes 11, 12 de carbone comprennent une portion inférieure et une portion supérieure suivant la direction verticale Z. La portion inférieure est agencée en regard de la paroi supérieure 16 du support collecteur d'électricité 14.

La portion inférieure comprend une surface inférieure 30 installée contre la paroi supérieure 16 du support collecteur d'électricité 14 (figure 2). La surface inférieure 30 de la première et de la deuxième bandes 11, 12 de carbone est par exemple collée à la paroi supérieure 16 du support collecteur d'électricité 14. On notera dans ce cas que les languettes 18 du support collecteur d'électricité 14 présentent en outre l'avantage de former un obstacle à la colle qui ne risque pas de venir immobiliser l'insert métallique 13 et laisse ainsi libre le glissement par dilatation thermique de l'insert métallique 13 par rapport au support collecteur d'électricité 14 suivant la direction d'extension longitudinale X.

La portion inférieure et la portion supérieure de chacune des première et deuxième bandes 11, 12 de carbone sont par exemple délimitées par un premier épaulement 31 s'étendant parallèlement à la direction d'extension longitudinale X et formant un logement accueillant la languette 18 correspondante du support collecteur d'électricité 14 (figure 2). Autrement dit, la dimension transversale de la section transversale de la portion inférieure des première et deuxième bandes 11, 12 de carbone, par rapport à la direction d'extension longitudinale X, est inférieure à celle de la portion supérieure desdites première et deuxième bandes 11, 12 de carbone. Cela permet, selon les besoins, d'assurer le contact entre les première et deuxième bandes 11, 12 de carbone et de l'insert métallique 13, au niveau de la portion supérieure desdites première et deuxième bandes 11, 12 de carbone et de la portion supérieure de l'insert métallique 13 ou de maitriser un jeu utile entre les première et deuxième bandes 11, 12 de carbone et l'insert métallique 13. Cela permet en outre de limiter la déformation élastique des languettes 18 lors du montage de l'insert métallique 13 dans le support collecteur d'électricité 14 et, le cas échéant de favoriser l'émoussage des dents 20 contre l'insert métallique 13.

Les premières parois latérales 17a du support collecteur d'électricité 14 se prolongent par exemple au-delà de la paroi supérieure 16 dudit support collecteur d'électricité 14 (figure 2). Le prolongement de chacune des premières parois latérales 17a forme, avec la languette 18 en regard de laquelle il s'étend, une rainure 32 s'étendant parallèlement à la direction d'extension longitudinale X et logeant l'une des première et deuxième bandes de carbone 11, 12, notamment la portion inférieure de l'une des première et deuxième bandes de carbone 11, 12 (figure 2).

Le prolongement des premières parois latérales 17a forme une butée qui permet de réduire le cisaillement de la colle, lors de l'assemblage de l'insert métallique 13 sous l'effet de l'effort appliqué par les languettes 18 sur les première et deuxième bandes 11, 12 de carbone. La qualité de l'assemblage et le passage du courant entre l'insert métallique 13 et le support collecteur d'électricité 14 sont ainsi mieux maitrisés.

Les première et deuxième bandes 11, 12 de carbone comprennent par exemple chacune un deuxième épaulement 33 s'étendant parallèlement à la direction d'extension longitudinale X et formant un logement accueillant le prolongement de la première paroi latérale 17a correspondant du support collecteur d'électricité 14 (figure 2). Autrement dit, les première et deuxième bandes 11, 12 de carbone sont pincées suivant la direction transversale Y, de part et d'autre de l'axe d'extension longitudinale, parallèle à la direction d'extension longitudinale X, desdites première et deuxième bandes 11, 12 de carbone. Cela permet d'augmenter davantage l'effort de rappel élastique appliqué par les languettes 18 sur l'insert métallique 13 et donc d'améliorer encore la qualité de l'assemblage entre l'insert métallique 13 et le support collecteur d'électricité 14.

La bande de frottement 10 est par exemple symétrique par rapport au pan Pₓ.

### Deuxième mode de réalisation de l'invention

Les figures 8 à 12 montrent la bande de frottement 10A selon le deuxième mode de réalisation de l'invention. La description des éléments communs et des variantes communes avec le premier mode de réalisation de l'invention ne sera pas reprise ici.

Selon ce mode de réalisation de l'invention, la paroi supérieure 16 du support collecteur d'électricité 14 comprend au moins une ouverture 34 globalement de forme allongée s'étendant suivant la direction d'extension longitudinale X, à l'intérieur de laquelle l'insert métallique 13 est logé (figures 9, 10 et 11). La ou les ouvertures 34 sont délimitées par un rebord 35 déformable élastiquement. Le rebord 35 de la ou des ouvertures 34 assurent le guidage lors de l'assemblage de l'insert métallique 13 et le support collecteur d'électricité 14 et le serrage de l'insert métallique 13 au support collecteur d'électricité 14 par emboîtement élastique.

Plus précisément, lors de l'assemblage de l'insert métallique 13 sur le support collecteur d'électricité 14, l'insert métallique 13 est inséré en force dans la ou les ouvertures 34 du support collecteur d'électricité 14, le rebord 35 de ladite ou desdites ouvertures 34 se déformant élastiquement à mesure que l'insert métallique 13 s'enfonce. La progression de l'enfoncement l'insert métallique 13 occasionne son serrage au niveau du rebord 35 de la ou des ouvertures 34 du support collecteur d'électricité 14. Une fois l'insert métallique 13 installé dans la ou les ouvertures 34 du support collecteur d'électricité 14, la déformation élastique du rebord 35 de ladite ou desdites ouvertures 34 tend à exercer un effort de retour élastique en direction de l'insert métallique 13. Ce dernier est enserré par le rebord 35 de la ou des ouvertures 34 (figure 11). Le serrage du rebord 35 et donc le contact entre l'insert métallique 13 et le rebord 35 du support collecteur d'électricité 14 permet d'assurer le passage du courant électrique entre l'insert métallique 13 et le support collecteur d'électricité 14.

Ce deuxième mode de réalisation de l'invention est particulièrement avantageux car il permet d'utiliser des profilés de support collecteur d'électricité 14 standard et de réaliser des découpes de sorte à former les ouvertures 34.

De préférence, la paroi supérieure 16 du support collecteur d'électricité 14 comprend une pluralité d'ouvertures 34 s'étendant successivement suivant la direction d'extension longitudinale X.

La ou les ouvertures 34 du support collecteur d'électricité 14 sont par exemple réalisées par usinage dans la paroi supérieure 16 du support collecteur d'électricité 14.

La portion inférieure de l'insert métallique 13 comprend successivement suivant la direction d'extension longitudinale X, au moins un talon 36 coopérant avec le rebord 35 de la ou des ouvertures 34 du support collecteur d'électricité 14 et au moins un logement 37 au niveau duquel la portion inférieure de l'insert métallique 13 épouse la paroi supérieure 16 du support collecteur d'électricité 14 (figure 8). Autrement dit, à chaque ouverture 34 du support collecteur d'électricité 14 est associée un talon 36 de la portion inférieure de l'insert métallique 13 qui, lors de l'assemblage de l'insert métallique 13 et du support collecteur d'électricité 14 est enfoncé dans ladite ouverture 34.

Afin de faciliter l'insertion de l'insert métallique 13 dans la ou les ouvertures 34 du support collecteur d'électricité 14, notamment le centrage de l'insert métallique 13 par rapport à la ou aux ouvertures 34 du support collecteur d'électricité 14, la portion inférieure de l'insert métallique 13 est par exemple chanfreinée (figures 10 et 11).

Le rebord 35 de la ou des ouvertures 34 du support collecteur d'électricité 14 pourra comprendre, de chaque côté du plan Pₓ, une paire d'encoches 38 définissant ensemble une languette 39 déformable élastiquement coopérant avec l'insert métallique 13 (figure 9). Les languettes 39 assurent avec le rebord 35 de la ou des ouvertures 34 l'assemblage de l'insert métallique 13 au support collecteur d'électricité 14 par emboîtement élastique (figure 10) ainsi que son serrage (figure 11). On notera que l'élasticité des languettes 39 est supérieure à celle du rebord 35, notamment nettement supérieure à celle du rebord 35.

Les languettes 39 du support collecteur d'électricité 14 coopèrent par exemple avec la ou les ouvertures 27 ou la ou les rainures de la portion inférieure de l'insert métallique 13. La ou les ouvertures 27 de l'insert métallique 13 s'engagent avec les languettes 39 du support collecteur d'électricité 14, de sorte à bloquer l'insert métallique 13 en translation suivant la direction verticale Z dans un sens opposée au support collecteur d'électricité 14 (figure 10). Autrement dit, les languettes 39 forment chacune une butée qui, lorsqu'elle coopère avec une ouverture 27 de l'insert métallique 13, empêche le retrait de l'insert métallique 13 de la ou des ouvertures 34 du support collecteur d'électricité 14. L'engagement des languettes 39 du support collecteur d'électricité 14 et de la ou des ouvertures 27 de l'insert métallique 13 supplée ainsi l'effort de retour élastique appliqué par le rebord 35 de la ou des ouvertures 34 du support collecteur d'électricité 14 sur l'insert métallique 13.

Les encoches 38 s'étendant par exemple sensiblement perpendiculairement au plan Pₓ.

Le rebord 35 de la ou des ouvertures 34 du support collecteur d'électricité 14 est par exemple en retrait par rapport aux languettes 39 (figure 9). En d'autres termes, les languettes 39 de chacune des ouvertures 34 du support collecteur d'électricité 14 dépassent en direction de la languette 39 qui lui est opposée, par rapport au rebord 35 de l'ouverture 34 associée. Cela permet d'assurer l'engagement de la ou des languettes 39 de la ou des ouvertures 34 du support collecteur d'électricité 14 dans la ou les ouvertures 27 ou de la ou des rainures de l'insert métallique 13.

Les encoches 24 sont par exemple réalisées symétriquement par rapport au plan Pₓ.

La ou les ouvertures 27 ou la ou les rainures de l'insert métallique 13 sont par exemple ménagées sur le ou les talons 36 dudit insert métallique 13.

### Troisième mode de réalisation de l'invention

Les figures 13 à 16 montrent la bande de frottement 10B selon le troisième mode de réalisation de l'invention. La description des éléments communs et des variantes communes avec le premier mode de réalisation de l'invention ne sera pas reprise ici.

Dans ce mode de réalisation de l'invention, les rainures 32 formées par le prolongement des premières parois latérales 17a et les languettes 18 présentent une section transversale par rapport à la direction d'extension longitudinale X de forme globalement trapézoïdale (figures 14 et 15). Les premier et deuxième épaulements 31, 33 ménagés dans les première et deuxième bandes 11, 12 de carbone sont en outre réalisés de sorte que la portion inférieure des première et deuxième bandes 11, 12 de carbone présente une section transversale de forme trapézoïdale, complémentaire avec celle des rainures 32 formées entre les languettes 18 et le prolongement des premières parois latérales 17a du support collecteur d'électricité 14.

Les première et deuxième bandes 11, 12 de carbone peuvent ainsi être assemblées au support collecteur d'électricité 14 par glissement desdites bandes 11, 12 de carbone parallèlement à la direction d'extension longitudinale X dans leurs rainures 32 respectives.

Le sertissage des languettes 18 du support collecteur d'électricité 14 contre la portion inférieure des première et deuxième bandes 11, 12 de carbone est réalisé lorsque l'insert métallique 13 est inséré entre les languettes 18 du support collecteur d'électricité 14, entraînant leur écartement l'une par rapport à l'autre par déformation élastique. L'insert métallique 13 permet ainsi via les languettes 18 d'appliquer un effort de serrage sur la première et la deuxième bandes 11, 12 de carbone. Cet effort de serrage permet au courant électrique de passer des première et deuxième bandes (11, 12) de carbone au support collecteur d'électricité 14.

Il est ainsi possible de s'affranchir du collage des première et deuxième bandes 11, 12 au support collecteur d'électricité 14. Cela permet de supprimer les risques de décollage des première et deuxième bandes 11, 12 de carbone, notamment en cas d'échauffement trop important desdites bandes 11, 12 de carbone, échauffement qui serait transmis à la colle.

Le prolongement des premières parois latérales 17a du support collecteur d'électricité 14 est par exemple incliné par rapport au plan Pₓ, de sorte à former des rainures 32 présentant une section transversale par rapport à la direction d'extension longitudinale X de forme globalement trapézoïdale (figures 14 et 15).

La paroi supérieure 16 du support collecteur d'électricité 14 est par exemple, au niveau de chacune des rainures 32 formées entre les languettes 18 et le prolongement des premières parois latérales 17a, bombée en direction de la paroi inférieure 15 (figures 14 et 15). Cela permet de donner à chacune des rainures 32 une élasticité transversale qui favorise le maintien élastique par serrage des première et deuxième bandes 11, 12 de carbone. Cela permet en outre d'améliorer le passage du courant électrique entre les première et deuxième bandes 11, 12 de carbone et le support collecteur d'électricité 14.

Comme illustré à la figure 16, des béquets 40 et des logements 41 peuvent en outre être prévus en correspondance sur les extrémités libres 21, 42 des languettes 18 et du prolongement des premières parois latérales 17a et la portion inférieure des première et deuxième bandes 11, 12 de carbone. Les béquets 40 et les logements 41 permettent, lorsqu'ils sont engagés ensemble, de sécuriser l'assemblage entre le support collecteur d'électricité 14 et les première et deuxième bandes 11, 12 de carbone, notamment contre les chocs.

L'insert métallique 13 peut aussi présenter une section transversale, par rapport à la direction d'extension longitudinale X, en forme de trapèze, la portion inférieure de l'insert métallique 13 comprenant la petite base et la portion supérieure de l'insert métallique 13 comprenant la grande base dudit trapèze (figures 14 et 15). De cette manière, l'insert métallique 13 favorise le serrage des première et deuxième bandes 11, 12 de carbone contre le prolongement des premières parois latérales 17a et donc l'assemblage en queue d'aronde entre le support collecteur d'électricité 14 et les première et deuxième bandes 11, 12 de carbone.

Les bandes de frottement 10, 10A, 10B décrites ci-dessus sont particulièrement avantageuses car elles permettent de réaliser un assemblage entre l'insert métallique 13 et le support collecteur d'électricité 14 par emboitement élastique. Ainsi, les bandes de frottement 10, 10A, 10B peuvent être assemblées plus rapidement et à moindre coût.

## Revendications

1. Bande de frottement (10, 10A, 10B) pour un pantographe de véhicule ferroviaire, comprenant :
- une première et une deuxième bande (11, 12) de carbone s'étendant parallèlement à une direction d'extension longitudinale (X) et de part et d'autre d'un plan d'extension longitudinal (Pₓ) comprenant ladite direction d'extension longitudinale,
- un insert métallique (13) s'étendant suivant la direction d'extension longitudinale (X) dans le plan d'extension longitudinal (Pₓ) et ménagé entre la première bande (11) de carbone et la deuxième bande (12) de carbone, et
- un support collecteur d'électricité (14) auquel sont assemblés les première et deuxième bandes (11, 12) de carbone et l'insert métallique (13),
la bande de frottement (10, 10A, 10B) étant **caractérisée en ce que** le support collecteur d'électricité (14) et/ou l'insert métallique (13) comprennent des moyens d'emboîtement élastique (18, 35, 39) coopérant avec l'insert métallique (13) et/ou le support collecteur d'électricité (14), de sorte à assurer l'assemblage de l'insert métallique (13) au support collecteur d'électricité (14) et le passage du courant électrique entre l'insert métallique (13) et le support collecteur d'électricité (14).

2. Bande de frottement (10, 10B) selon la revendication 1, dans lequel le support collecteur d'électricité comprend une paroi (16), dite paroi supérieure, agencée en regard des première et deuxième bandes (11, 12) de carbone et de l'insert métallique (13), et dans lequel les moyens d'emboitement élastique comprennent une paire de languettes (18) déformables élastiquement s'étendant depuis la paroi supérieure (16) en regard l'une de l'autre et définissant ensemble un espace (17) accueillant l'insert métallique (13).

3. Bande de frottement (10, 10B) selon la revendication 2, dans lequel les languettes (18) comprennent chacune une dent (20) déformable élastiquement et plastiquement s'étendant depuis une extrémité libre (21) de ladite languette, dans l'espace (17) défini entre lesdites languettes et accueillant l'insert métallique (13), lesdites dents (20) coopérant avec l'insert métallique (13).

4. Bande de frottement (10, 10B) selon la revendication 2 ou la revendication 3, dans lequel le support collecteur d'électricité (14) comprend deux parois (17a), dites parois latérales, globalement orthogonales par rapport à la paroi supérieure (16), lesdites parois latérales se prolongeant au-delà de la paroi supérieure (16) dudit support collecteur d'électricité (14), en direction des première et deuxième bandes (11, 12) de carbone, et dans lequel ledit prolongement de chacune des parois latérales (17a) forme, avec l'une des languettes (18), une rainure (32) s'étendant parallèlement à la direction d'extension longitudinale (X) et logeant l'une des première et deuxième bandes (11, 12) de carbone.

5. Bande de frottement (10B) selon la revendication 4, dans lequel lesdites rainures (32) présentent une section transversale par rapport à la direction d'extension longitudinale (X) de forme globalement trapézoïdale, les première et deuxième bandes (11, 12) de carbone comprenant une portion, dite portion inférieure, en regard de la paroi supérieure (16) présentant une section transversale par rapport à la direction d'extension longitudinale (X) de forme complémentaire avec celle desdites rainures (32), l'insert métallique (13) appliquant via les languettes (18) un effort de serrage sur la première et la deuxième bandes (11, 12) de carbone.

6. Bande de frottement (10B) selon la revendication 5, dans lequel la paroi supérieure (16) du support collecteur d'électricité (14) est bombée dans un sens opposé aux première et deuxième bandes (11, 12) de carbone, au niveau de chacune des rainures (32).

7. Bande de frottement (10B) selon la revendication 5 ou la revendication 6, dans lequel des béquets (40) et des logements (41) sont prévus en correspondance sur les languettes (18) et prolongements des parois latérales (17a) et sur la portion inférieure des première et deuxième bandes (11, 12) de carbone.

8. Bande de frottement (10, 10B) selon l'une des revendications 5 à 7, dans lequel l'insert métallique (13) présente une section transversale par rapport à la direction d'extension longitudinale (X) en forme de trapèze.

9. Bande de frottement (10A) selon la revendication 1, dans lequel le support collecteur d'électricité (14) comprend une paroi (16), dite paroi supérieure, agencée en regard des première et deuxième bandes (11, 12) de carbone et de l'insert métallique (13), dans lequel la paroi supérieure (16) du support collecteur d'électricité (14) comprend au moins une ouverture (34) de forme allongée s'étendant suivant la direction d'extension longitudinale (X), à l'intérieur de laquelle l'insert métallique (13) est logé, et dans lequel les moyens d'emboîtement élastique comprennent un rebord (35) déformable élastiquement délimitant la ou les ouvertures (34).

10. Bande de frottement (10A) selon la revendication 9, dans lequel l'insert métallique (13) comprend successivement suivant la direction d'extension longitudinale (X), au moins un talon (36) coopérant avec le rebord (35) de la ou des ouvertures (34) du support collecteur d'électricité (14) et au moins un logement (37) au niveau duquel l'insert métallique (13) vient buter sur la paroi supérieure (16) du support collecteur d'électricité (14).

11. Bande de frottement (10A) selon la revendication 9 ou la revendication 10, dans lequel les moyens d'emboitement élastique comprennent en outre des languettes (39) déformables élastiquement chacune définie par une paire d'encoches (38) s'étendant sensiblement perpendiculairement au plan (Pₓ) et ménagée sur le rebord (35) de la ou des ouvertures (34).

12. Bande de frottement (10A) selon la revendication 11, dans lequel le rebord (35) de la ou des ouvertures (34) du support collecteur d'électricité (14) est en retrait par rapport aux languettes (39).

13. Bande de frottement (10, 10A, 10B) selon l'une quelconque des revendications 1 à 12, dans lequel l'insert métallique (13) comprend une portion, dite portion inférieure, comprenant au moins une rainure ou une ouverture (27) de forme allongée s'étendant suivant la direction d'extension longitudinale (X) et coopérant avec les moyens d'emboitement élastique (18, 39) du support collecteur d'électricité (14).

14. Archet de pantographe comprenant au moins une bande de frottement (10B) selon l'une des revendications 1 à 13.

15. Pantographe pour véhicule ferroviaire comportant un archet selon la revendication 14.

## Patentansprüche

1. Schleifleiste (10, 10A, 10B) für einen Stromabnehmer eines Schienenfahrzeugs, Folgendes umfassend:
- eine erste und eine zweite Carbonleiste (11, 12), die sich parallel zu einer Längsausdehnungsrichtung (X) und zu beiden Seiten einer Längsausdehnungsebene (Pₓ), die die Längsausdehnungsrichtung umfasst, ausdehnt,
- einen Metalleinsatz (13), der sich entlang der Längsausdehnungsrichtung (X) in der Längsausdehnungsebene (Pₓ) ausdehnt und zwischen der ersten Carbonleiste (11) und der zweiten Carbonleiste (12) eingerichtet ist und
- einen Stromkollektorträger (14), an den die erste und die zweite Carbonleiste (11, 12) und der Metalleinsatz (13) angebaut sind,
wobei die Schleifleiste (10, 10A, 10B) **dadurch gekennzeichnet ist, dass** der Stromkollektorträger (14) und/oder der Metalleinsatz (13) Mittel zum elastischen Einrasten (18, 35, 39) umfassen, die mit dem Metalleinsatz (13) und/oder dem Stromkollektorträger (14) derart zusammenwirken, um für das Anbauen des Metalleinsatzes (13) an den Stromkollektorträger (14) und das Durchgehen des elektrischen Stroms durch den Metalleinsatz (13) und den Stromkollektorträger (14) zu sorgen.

2. Schleifleiste (10, 10B) nach Anspruch 1, wobei der Stromkollektorträger eine Wand (16), obere Wand genannt, umfasst, die gegenüber der ersten und zweiten Carbonleiste (11, 12) und dem Metalleinsatz (13) eingerichtet ist, und wobei die Mittel zum elastischen Einrasten ein Paar elastisch verformbare Laschen (18) umfassen, die sich von der oberen Wand (16) einander gegenüber ausdehnen und gemeinsam einen Raum (17), der den Metalleinsatz (13) aufnimmt, definieren.

3. Schleifleiste (10, 10B) nach Anspruch 2, wobei die Laschen (18) jeweils einen elastisch und plastisch verformbaren Zahn (20) umfassen, der sich von einem freien Ende (21) der Lasche in dem Raum (17), der zwischen den Laschen definiert ist und den Metalleinsatz (13) aufnimmt, ausdehnt, wobei die Zähne (20) mit dem Metalleinsatz (13) zusammenwirken.

4. Schleifleiste (10, 10B) nach Anspruch 2 oder Anspruch 3, wobei der Stromkollektorträger (14) zwei Wände (17a), Seitenwände genannt, umfasst, die im Allgemeinen in Bezug auf die obere Wand (16) orthogonal sind, wobei sich die Seitenwände über die obere Wand (16) des Stromkollektorträgers (14) hinaus in Richtung der ersten und der zweiten Carbonleiste (11, 12) verlängern, und wobei die Verlängerung jeder der Seitenwände (17a) mit einer der Laschen (18) eine Nut (32) bildet, die sich parallel zu der Längsausdehnungsrichtung (X) ausdehnt und eine der ersten und zweiten Carbonleiste (11, 12) aufnimmt.

5. Schleifleiste (10B) nach Anspruch 4, wobei die Nuten (32) einen Querschnitt in Bezug auf die Längsausdehnungsrichtung (X) in einer im Allgemeinen Trapezform aufweisen, wobei die erste und die zweite Carbonleiste (11, 12) einen Abschnitt, unterer Abschnitt genannt, gegenüber der oberen Wand (16) umfassen, der einen Querschnitt in Bezug auf die Längsausdehnung (X) in komplementärer Form zu jener der Nuten (32) aufweist, wobei der Metalleinsatz (13) über die Laschen (18) eine Spannkraft auf die erste und die zweite Carbonleiste (11, 12) anlegt.

6. Schleifleiste (10B) nach Anspruch 5, wobei die obere Wand (16) des Stromkollektorträgers (14) in eine Richtung entgegengesetzt zu der ersten und zweiten Carbonleiste (11, 12) im Bereich jeder der Nuten (32) gewölbt ist.

7. Schleifleiste (10B) nach Anspruch 5 oder Anspruch 6, wobei Ausschnitte (40) und Aufnahmen (41) in Übereinstimmung auf den Laschen (18) und Verlängerungen der Seitenwände (17a) und auf dem unteren Abschnitt der ersten und zweiten Carbonleiste (11, 12) vorgesehen sind.

8. Schleifleiste (10, 10B) nach einem der Ansprüche 5 bis 7, wobei der Metalleinsatz (13) einen Querschnitt in Bezug auf die Längsausdehnungsrichtung (X) in Trapezform aufweist.

9. Schleifleiste (10A) nach Anspruch 1, wobei der Stromkollektorträger (14) eine Wand (16), obere Wand genannt, umfasst, die gegenüber der ersten und der zweiten Carbonleiste (11, 12) und des Metalleinsatzes (13) eingerichtet ist, wobei die obere Wand (16) des Stromkollektorträgers (14) mindestens eine Öffnung (34) in länglicher Form umfasst, die sich entlang der Längsausdehnungsrichtung (X) ausdehnt, in deren Innerem der Metalleinsatz (13) aufgenommen ist, und wobei die Mittel zum elastischen Einrasten einen elastisch verformbaren Rand (35) umfassen, der die Öffnung(en) (34) abgrenzt.

10. Schleifleiste (10A) nach Anspruch 9, wobei der Metalleinsatz (13) nacheinander entlang der Längsausdehnungsebene (X) mindestens einen Absatz (36) umfasst, der mit dem Rand (35) der Öffnung(en) (34) des Stromkollektorträgers (14) und mindestens einer Aufnahme (37), auf deren Ebene der Metalleinsatz (13) auf der oberen Wand (16) des Stromkollektorträgers (14) zum Anschlagen kommt, zusammenwirkt.

11. Schleifleiste (10A) nach Anspruch 9 oder Anspruch 10, wobei die Mittel zum elastischen Einrasten weiter elastisch verformbare Laschen (39) umfassen, die jeweils von einem Paar von Kerben (38) definiert sind, die sich im Wesentlichen senkrecht zu der Ebene (Pₓ) ausdehnen und auf dem Rand (35) der Öffnung(en) (34) eingerichtet sind.

12. Schleifleiste (10A) nach Anspruch 11, wobei der Rand (35) der Öffnung(en) (34) des Stromkollektorträgers (14) in Bezug auf die Laschen (39) nach hinten versetzt ist.

13. Schleifleiste (10, 10A, 10B) nach einem der Ansprüche 1 bis 12, wobei der Metalleinsatz (13) einen Abschnitt, unterer Abschnitt genannt, umfasst, der mindestens eine Nut oder eine Öffnung (27) in länglicher Form umfasst, die sich entlang der Längsausdehnungsrichtung (X) ausdehnt und mit den Mitteln zum elastischen Einrasten (18, 39) des Stromkollektorträgers (14) zusammenwirkt.

14. Stromabnehmerbügel, der mindestens eine Schleifleiste (10B) nach einem der Ansprüche 1 bis 13 umfasst.

15. Stromabnehmer für ein Schienenfahrzeug, der einen Bügel nach Anspruch 14 beinhaltet.

## Claims

1. Contact strip (10, 10A, 10B) for a rail vehicle pantograph, comprising:
- a first and a second carbon strip (11, 12) extending parallel to a longitudinal extension direction (X) and on either side of a longitudinal extension plane (Pₓ) comprising said longitudinal extension direction,
- a metal insert (13) extending along the longitudinal extension direction (X) in the longitudinal extension plane (Pₓ) and arranged between the first carbon strip (11) and the second carbon strip (12), and
- an electricity collector support (14) to which are assembled the first and second carbon strips (11, 12) and the metal insert (13),
the contact strip (10, 10A, 10B) being **characterised in that** the electricity collector support (14) and/or the metal insert (13) comprise elastic interlocking means (18, 15, 39) engaging with the metal insert (13) and/or the electricity collector support (14), so as to ensure the assembly of the metal insert (13) to the electricity collector support (14) and the passage of the electric current between the metal insert (13) and the electricity collector support (14).

2. Contact strip (10, 10B) according to claim 1, wherein the electricity collector support comprises a wall (16), termed upper wall, arranged facing the first and second carbon strips (11, 12) and the metal insert (13), and wherein the elastic interlocking means comprise a pair of elastically deformable flaps (18) extending from the upper wall (16) facing one another and together defining a space (17) receiving the metal insert (13).

3. Contact strip (10, 10B) according to claim 2, wherein the flaps (18) each comprise an elastically and plastically deformable tooth (20) extending from a free end (21) of said flap, into the space (17) defined between said flaps and receiving the metal insert (13), said teeth (20) engaging with the metal insert (13).

4. Contact strip (10, 10B) according to claim 2 or 3, wherein the electricity collector support (14) comprises two walls (17a), termed side walls, mainly orthogonal with respect to the upper wall (16), said side walls being extended beyond the upper wall (16) of said electricity collector support (14), in the direction of the first and second carbon strips (11, 12), and wherein said extension of each of the side walls (17a) forms, with one of the flaps (18), a groove (32) extending parallel to the longitudinal extension direction (X) and housing one of the first and second carbon strips (11, 12).

5. Contact strip (10B) according to claim 4, wherein said grooves (32) have a transversal cross-section with respect to the longitudinal extension direction (X) of mainly trapezoidal shape, the first and second carbon strips (11, 12) comprising a portion, termed lower portion, facing the upper wall (16) having a transverse cross-section with respect to the longitudinal extension direction (X) of complementary shape with that of said grooves (32), the metal insert (13) applying via the flaps (18), a clamping force on the first and the second carbon strips (11, 12).

6. Contact strip (10B) according to claim 5, wherein the upper wall (16) of the electricity collector support (14) is curved in a direction opposite the first and second carbon strips (11, 12), at the level of each of the grooves (32).

7. Contact strip (10B) according to claim 5 or 6, wherein spoilers (40) and housings (41) are correspondingly provided on the flaps (18) and extensions of the side walls (17a) and on the lower portion of the first and second carbon strips (11, 12).

8. Contact strip (10, 10B) according to one of claims 5 to 7, wherein the metal insert (13) has a transverse cross-section with respect to the trapezium-shaped longitudinal extension direction (X).

9. Contact strip (10A) according to claim 1, wherein the electricity collector support (14) comprises a wall (16), termed upper wall, arranged facing the first and second carbon strips (11, 12) and the metal insert (13), wherein the upper wall (16) of the electricity collector support (14) comprises at least one opening (34) of elongate shape, extending along the longitudinal extension direction (X), inside which the metal insert (13) is housed, and wherein the elastic interlocking means comprise an elastically deformable edge (35) delimiting the opening(s) (34).

10. Contact strip (10A) according to claim 9, wherein the metal insert (13) successively comprises along the longitudinal extension direction (X), at least one stub (36) engaging with the edge (35) of the opening(s) (34) of the electricity collector support (14) and at least one housing (37) at the level of which the metal insert (13) abuts on the upper wall (16) of the electricity collector support (14).

11. Contact strip (10A) according to claim 9 or 10, wherein the elastic interlocking means further comprise elastically deformable flaps (39), each defined by a pair of notches (38) extending substantially perpendicularly to the plane (Pₓ) and arranged on the edge (35) of the opening(s) (34).

12. Contact strip (10A) according to claim 11, wherein the edge (35) of the opening(s) (34) of the electricity collector support (14) is recessed with respect to the flaps (39).

13. Contact strip (10, 10A, 10B) according to any one of claims 1 to 12, wherein the metal insert (13) comprises a portion termed lower portion, comprising at least one groove or one opening (27) of elongate shape, extending along the longitudinal extension direction (X) and engaging with the elastic interlocking means (18, 39) of the electricity collector support (14).

14. Pantograph collector head comprising at least one contact strip (10B) according to one of claims 1 to 13.

15. Pantograph for rail vehicle comprising a collector head according to claim 14.
